(19) **Europäisches Patentamt / European Patent Office / Office européen des brevets**

(11) **EP 4 491 663 A1**

(12) # EUROPEAN PATENT APPLICATION

(43) Date of publication:
**15.01.2025  Bulletin 2025/03**

(21) Application number: **23184500.9**

(22) Date of filing: **10.07.2023**

(51) International Patent Classification (IPC):
**C08K 3/04** *(2006.01)*  **C08K 5/52** *(2006.01)*
**C08K 7/14** *(2006.01)*  **C08L 23/14** *(2006.01)*
**B41M 5/26** *(2006.01)*

(52) Cooperative Patent Classification (CPC):
(C-Sets available)
**C08K 3/04; C08K 5/34928; C08K 7/14;**
B41M 5/267; C08K 5/005; C08K 5/0066    (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Borealis AG**
**1020 Vienna (AT)**

(72) Inventors:
• **KRALICEK, Markus**
  **4021 Linz (AT)**
• **GITSAS, Antonios**
  **4021 Linz (AT)**
• **COSTA, Francis Reny**
  **4021 Linz (AT)**
• **STOCKREITER, Wolfgang**
  **8021 Linz (AT)**
• **SCHÜTZ, Florian**
  **1020 Vienna (AT)**

(74) Representative: **Kador & Partner Part mbB**
**Corneliusstraße 15**
**80469 München (DE)**

(54) **FLAME RETARDANT POLYPROPYLENE COMPOSITION HAVING LASER-MARKING CAPABILITY**

(57)    The present invention concerns a flame retardant polypropylene composition comprising a polypropylene polymer, a nitrogen-containing flame retardant carbon black and optionally glass fibers and an article comprising the flame retardant polypropylene composition.

**EP 4 491 663 A1**

(52) Cooperative Patent Classification (CPC): (Cont.)

C-Sets
**C08K 3/04, C08L 23/14;**
**C08K 5/34928, C08L 23/14;**
**C08K 7/14, C08L 23/14**

**Description**

The present invention is related to a flame retardant polypropylene composition with or without glass fibers and an article comprising the flame retardant polypropylene composition.

In electrical applications certain flame retardant requirements have to be met. Components for electric applications related in particular to e-mobility as well as stationary devices made traditionally of metal parts are being continuously replaced by plastic counterparts, in particular flame retardant polypropylene compositions. Stricter fire safety standards and regulations have also been introduced in the past few years, and combined with technological developments they have a significant influence on the raw materials used for various flame-retardant plastic applications. This has not only lead to a greater demand for flame retardants but has also placed new demands on the flame retardants themselves. In particular, a REACH restriction with the aim of restricting production, placing on the market and use of all per- and polyfluoroalkyl compounds (PFAS) in the EU has been proposed. Thus, fluoropolymers are under consideration for a potential restriction. Accordingly, flame retardant polypropylene compositions are sought for which contain only low amounts of halogens or which are preferably even free of halogens.

Besides their performance, proper labeling of flame retardant polypropylene compositions is seen as an important safety feature. Methods for marking thermoplastic resins include the spraying of ink. However, problems with peeling of the ink surface, weatherability (discoloration of the ink) and wear resistance (wearing of the ink surface) are generally encountered. For these reasons, much industrial use has been made recently of laser marking methods, which are noncontact, have a rapid marking speed, are automated, and enable easy process control. Laser marking methods are processes that use laser light to place marks, bar codes or data matrix codes on the surface of metal, ceramic, macromolecular organic materials or the like.

EP 1 288 262 discloses a halogen-free flame-retardant aromatic polycarbonate resin composition and articles made thereof. A flame retardant composition for laser marking is disclosed in EP 796 743. This flame retardant laser-markable molding composition comprises a polyester, a radiation-sensitive poly(haloaryl acrylate) flame retardant and a flame retardant synergist.

In the state of the art, the proposed solutions are often using either polymer matrices other than polyolefins and/or flame retardants containing halogens, or not containing flame retardants at all.

EP 4 124 636 is directed to a flame retardant polypropylene composition which is free of halogens and comprises a high melt strength polypropylene as antidripping agent. In addition, preferably no glass fibers are present in the flame retardant polypropylene composition.

It is therefore an object of the invention to provide a flame retardant polypropylene composition which contains only low amounts of halogens or which is preferably even free of halogens.

It is a further object of the invention to provide a flame retardant polypropylene composition suitable for laser marking and containing only low amounts of halogens or preferably being free of halogens.

A further object of the invention is to provide a flame retardant polypropylene composition suitable for laser marking and containing only low amounts of halogens or preferably being free of halogens and at the same time having improved mechanical strength.

It has been surprisingly found that the aforementioned objects can be achieved by the flame retardant polypropylene composition according to the invention.

In a first aspect the invention provides a flame retardant polypropylene composition comprising, or consisting of,

a) a polypropylene polymer in an amount of 23.0 to 80.0 wt.% based on the total weight of the flame retardant polypropylene composition,

b) a nitrogen-containing flame retardant in an amount of 10.0 to 40.0 wt.% based on the total weight of the flame retardant polypropylene composition,

c) carbon black in an amount of 0.1 to 15.0 wt.% based on the total weight of the flame retardant polypropylene composition,

and wherein the flame retardant polypropylene composition does not comprise a high melt strength polypropylene.

In a second aspect the invention provides a flame retardant polypropylene composition comprising, or consisting of,

a) a polypropylene polymer in an amount of 23.0 to 80.0 wt.% based on the total weight of the flame retardant polypropylene composition,

b) a nitrogen-containing flame retardant in an amount of 10.0 to 40.0 wt.% based on the total weight of the flame retardant polypropylene composition,

c) carbon black in an amount of 0.1 to 15.0 wt.% based on the total weight of the flame retardant polypropylene composition,

d) glass fibers in an amount of 0.6 to 40.0 wt.% based on the total weight of the flame retardant polypropylene composition.

The flame retardant polypropylene compositions according to the invention have several advantages. First, the inventive flame retardant polypropylene compositions are not only suitable for laser marking but at the same time are more environmentally friendly as they contain only low amounts of halogens or they preferably are free of halogens, such as all per- and polyfluoroalkyl compounds.

Second, upon adding glass fibers the inventive flame retardant polypropylene compositions show improved mechanical strength and are at the same time suitable for laser marking. Laser marking is a feature that significantly simplifies the design, improves the contrast and the marking speed of the articles formed from the inventive flame retardant polypropylene compositions.

Finally, further advantages of the claimed flame retardant polypropylene compositions are lower $CO_2$ footprint, reduced weight and reduced costs.

In the following preferred embodiments and features of the invention are described. All these preferred embodiments and features are preferred embodiments and features of the flame retardant polypropylene composition of the first aspect and of the flame retardant polypropylene composition of the second aspect, if applicable.

The flame retardant polypropylene composition according to the first aspect does not comprise a high melt strength polypropylene. Preferably, also flame retardant polypropylene composition according to the second aspect does not comprise a high melt strength polypropylene.

As used herein, a high melt strength polypropylene is a high melt strength polypropylene having a F30 melt strength determined according to ISO 16790:2005 of at least 20 cN. In addition, the high melt strength polypropylene is characterized by a branching index g' determined according to GPC equal or below 0.95, more preferably equal or below 0.9, still more preferably equal or below 0.85, like equal or below 0.8. Furthermore, the high melt strength polypropylene has a F30 melt strength of at least 20 cN and a v30 melt extensibility of more than 200 mm/s, preferably has a F30 melt strength of 20 to 50 cN and a v30 melt extensibility of more than 200 to 300 mm/s. The F30 melt strength and the v30 melt extensibility are measured according to ISO 16790:2005. The high melt strength polypropylene can be further defined by the strain hardening factor (SHF). Accordingly it is preferred that the high melt strength polypropylene, has a strain hardening factor (SHF) of at least 1.7, more preferably of at least 1.9, yet more preferably in the range of 1.9 to 7.0, still more preferably in the range of 1.9 to 6.5 measured at a strain rate of 3.0 $s^{-1}$ and a Hencky strain of 2.5. The high melt strength polypropylene has a melt flow rate $MFR_2$ (230 °C, 2.16 kg) measured according to ISO 1133 in a range of 0.5 to 15.0 g/10 min, still more preferably in a range of 1.0 to 10.0 g/10 min, like in the range of 1.8 to 3.0 g/10 min. The high melt strength polypropylene (HMS-PP), has a melting point of at least 130°C, more preferably of at least 135°C and most preferably of at least 140°C. The crystallization temperature is preferably at least 120°C. Further, the high melt strength polypropylene can be a high melt strength random propylene copolymer or a high melt strength propylene homopolymer the latter being preferred.

For the purpose of the present invention, the expression "propylene homopolymer" refers to a polypropylene that consists substantially, i.e. of at least 97 mol%, preferably of at least 98 mol%, more preferably of at least 99 mol%, most preferably of at least 99.8 mol% of propylene units. In a preferred embodiment only propylene units in the propylene homopolymer are detectable.

The flame retardant polypropylene composition according to the invention comprises a polypropylene polymer a). The polypropylene polymer a) can also be a mixture of two or more polypropylene polymers differing from each other. Preferably, the polypropylene polymer a) comprises, or consists of, two polypropylene polymers differing from each other.

In the first aspect of the flame retardant polypropylene composition, the polypropylene polymer a) is present in an amount of preferably 30.0 to 76.0 wt.%, more preferably 40.0 to 75.0 wt.%, based on the total weight of flame retardant polypropylene composition.

In this first aspect of the flame retardant polypropylene composition, the polypropylene polymer a) preferably comprises, or consists of a heterophasic propylene copolymer.

In the second aspect of the flame retardant polypropylene composition, the polypropylene polymer a) is present in an amount of preferably 30.0 to 70.0 wt.%, more preferably 35.0 to 60.0 wt.%, even more preferably 40.0 to 55.0 wt.%, based on the total weight of the flame retardant polypropylene composition.

In this second aspect of the flame retardant polypropylene composition, the polypropylene polymer a) preferably comprises, or consists of a heterophasic propylene copolymer and/or a polypropylene random copolymer and/or a polypropylene homopolymer, more preferably comprises, or consists of a heterophasic propylene copolymer and a polypropylene random copolymer.

In a preferred embodiment of the second aspect of the flame retardant polypropylene composition, the polypropylene polymer a) is present in an amount of preferably 30.0 to 70.0 wt.%, more preferably 35.0 to 60.0 wt.%, even more preferably 40.0 to 55.0 wt.%, based on the total weight of the flame retardant polypropylene composition and is a heterophasic propylene copolymer.

In another preferred embodiment of the second aspect of the flame retardant polypropylene composition, the polypropylene polymer a) is present in an amount of preferably 30.0 to 70.0 wt.%, more preferably 35.0 to 60.0 wt.%, even more preferably 40.0 to 55.0 wt.%, based on the total weight of the flame retardant polypropylene composition and comprises, or consists of, a heterophasic propylene copolymer and a polypropylene random copolymer. In this embodiment, the heterophasic propylene copolymer is present in an amount of 10.0 to 40.0 wt.%, more preferably 15.0 to 35.0 wt.%, even more preferably 20.0 to 30.0 wt.%, based on the total weight of the flame retardant polypropylene composition and the propylene random copolymer is present in an amount of 10.0 to 40.0 wt.%, more preferably 15.0 to 35.0 wt.%, even more preferably 20.0 to 30.0 wt.%, based on the total weight of the flame retardant polypropylene composition.

The heterophasic propylene copolymer comprises, or consists of, a matrix and an elastomer dispersed within the matrix.

Preferably, the matrix comprises, or consists of, a propylene homopolymer or a propylene random copolymer and the elastomer comprises, or consists of, a copolymer of propylene and ethylene and/or a $C_4$ to $C_8$ alpha-olefin, more preferably the elastomer comprises, or consists of, a copolymer of propylene and ethylene.

Preferably, the heterophasic propylene copolymer has a melt flow rate $MFR_2$ (230°C, 2.16 kg) of from 0.5 to 120 g/10 min, preferably 1 to 110 g/10 min, more preferably 5 to 105 g/10 min, determined according to ISO 1133 and/or a density of from 0.880 to 0.910 $g/cm^3$, preferably 0.890 to 0.910 $g/cm^3$ determined according to ISO 1183.

Generally in the present invention, the expression "heterophasic" indicates that the elastomer is (finely) dispersed in the matrix. In other words the elastomer forms inclusion in the matrix. Thus the matrix contains (finely) dispersed inclusions being not part of the matrix and said inclusions contain the elastomer. The term "inclusion" according to this invention shall preferably indicate that the matrix and the inclusion form different phases within the heterophasic polypropylene, said inclusions are for instance visible by high resolution microscopy, like electron microscopy or scanning force microscopy.

Preferably, the heterophasic propylene copolymer has a rather low total comonomer content, preferably ethylene content. Thus, it is preferred that the comonomer content of the heterophasic propylene copolymer is in the range from 4.0 to 17.0 mol%, more preferably in the range from 5.0 to 14.0 mol%, and even more preferably in the range from 6.0 to 12.0 mol%.

Heterophasic propylene copolymers are generally featured by a xylene cold soluble (XCS) fraction and a xylene cold insoluble (XCI) fraction. For the purpose of the present application, the xylene cold soluble (XCS) fraction of the heterophasic propylene copolymers is essentially identical with the elastomer of said heterophasic propylene copolymers.

Accordingly when talking about the intrinsic viscosity and the ethylene content of elastomer of the heterophasic propylene copolymers the intrinsic viscosity and the ethylene content of the xylene cold soluble (XCS) fraction of said heterophasic propylene copolymers is meant.

Accordingly, the matrix content, i.e. the xylene cold insoluble (XCI) content, in the polypropylene polymer a) being a heterophasic propylene copolymer is preferably in the range of 75.0 to 93.0 wt.%, more preferably in the range of 77.0 to 91.0 wt. %, even more preferably 78.0 to 89.0 wt.% based on the total weight of the heterophasic propylene copolymer.

The elastomer, i.e. the xylene cold soluble (XCS) content, in the polypropylene polymer a) being a heterophasic propylene copolymer is preferably in the range of 7.0 to 25.0 wt.%, more preferably in the range of 9.0 to 23.0 wt.%, even more preferably in the range of 11.0 to 22.0 wt.% based on the total weight of the heterophasic propylene copolymer.

Preferably, the intrinsic viscosity (IV) of the xylene cold soluble (XCS) fraction of the polypropylene polymer a) being a heterophasic propylene copolymer is rather low. Accordingly, the intrinsic viscosity of the xylene cold soluble (XCS) fraction of the polypropylene polymer a) being a heterophasic propylene copolymer is below 3.5 dl/g, more preferably not more than 3.4 dl/g. Even more preferred, the intrinsic viscosity of the xylene cold soluble (XCS) fraction of the polypropylene polymer a) being a heterophasic propylene copolymer is in the range of 1.5 to below 3.5 dl/g, more preferably in the range 1.9 to 3.4 dl/g, like 2.0 to 3.4 dl/g.

The first component of the heterophasic propylene copolymer is the matrix. Polypropylenes suitable for use as matrix may include any type of isotactic or predominantly isotactic polypropylene homopolymer or random copolymer known in the art. Thus, the polypropylene may be a propylene homopolymer or an isotactic random copolymer of propylene with ethylene and/or $C_4$ to $C_8$ alphaolefins, such as for example 1-butene, 1-hexene or 1-octene, wherein the total comonomer content ranges from 0.05 to 10 wt.%.

Further and preferably the matrix has a moderate melt flow rate. Preferably, the matrix has a melt flow rate $MFR_2$ (230°C, 2.16 kg) determined according to ISO 1133 of in a range of 5.0 to 180.0 g/10 min, more preferably of 7.0 to 170.0 g/10 min, still more preferably of 8.0 to 160.0 g/10 min.

Furthermore, the matrix can be multimodal or bimodal in view of the molecular weight.

**EP 4 491 663 A1**

The expression "multimodal" or "bimodal" used throughout the present invention refers to the modality of the polymer, i.e. the form of its molecular weight distribution curve, which is the graph of the molecular weight fraction as a function of its molecular weight, and/or the form of its comonomer content distribution curve, which is the graph of the comonomer content as a function of the molecular weight of the polymer fractions.

However, it is preferred that the matrix is not multimodal or bimodal.

The second component of the heterophasic propylene copolymer is the elastomer. The elastomer comprises, preferably consists of, (i) propylene and (ii) ethylene and/or at least another $C_4$ to $C_8$ $\alpha$-olefin, more preferably (i) propylene and (ii) ethylene and at least another $\alpha$-olefin selected from the group consisting of 1-butene, 1-pentene, 1-hexene, 1-heptene and 1-octene. The elastomer may additionally contain units derived from a conjugated diene, like butadiene, or a non-conjugated diene, however it is preferred that the elastomeric copolymer consists of (i) propylene and (ii) ethylene and/or $C_4$ to $C_8$ $\alpha$-olefins only. Suitable non-conjugated dienes, if used, include straight-chain and branched-chain acyclic dienes, such as 1,4-hexadiene, 1,5-hexadiene, 1,6-octadiene, 5-methyl-1, 4-hexadiene, 3,7-dimethyl-1,6-octadiene, 3,7-dimethyl-1,7-octadiene, and the mixed isomers of dihydromyrcene and dihydro-ocimene, and single ring alicyclic dienes such as 1,4-cyclohexadiene, 1,5-cyclooctadiene, 1,5-cyclododecadiene, 4-vinyl cyclohexene, 1-allyl-4-isopropylidene cyclohexane, 3-allyl cyclopentene, 4-cyclohexene and 1-isopropenyl-4-(4-butenyl) cyclohexane. Multi-ring alicyclic fused and bridged ring dienes are also suitable including tetrahydroindene, methyltetrahydroindene, dicyclopentadiene, bicyclo (2,2,1) hepta-2,5-diene, 2-methyl bicycloheptadiene, and alkenyl, alkylidene, cycloalkenyl and cycloalkylidene norbornenes, such as 5-methylene-2-norbornene, 5-isopropylidene norbornene, 5-(4-cyclopentenyl)-2-norbornene; and 5-cyclohexylidene-2-norbornene. Preferred non-conjugated dienes are 5-ethylidene-2-norbornene, 1,4-hexadiene and dicyclopentadiene.

Accordingly, the elastomer preferably comprises at least propylene and ethylene and may comprise other units derivable from a further $\alpha$-olefin as defined in the previous paragraph. However, it is in particular preferred that elastomer comprises units only derivable from propylene and ethylene and optionally a conjugated diene, like butadiene, or a non-conjugated diene as defined in the previous paragraph, like 1,4-hexadiene. Thus an ethylene propylene non-conjugated diene monomer polymer (EPDM) and/or an ethylene propylene rubber (EPR) as elastomer is especially preferred, the latter most preferred.

Like the matrix, the elastomer can be unimodal or multimodal, like bimodal. Concerning the definition of unimodal and multimodal, like bimodal, it is referred to the definition above.

The heterophasic propylene copolymer can be produced by blending the matrix and the elastomer. However, it is preferred that the heterophasic propylene copolymer is produced in a sequential step process, using reactors in serial configuration and operating at different reaction conditions. As a consequence, each fraction prepared in a specific reactor may have its own molecular weight distribution and/or comonomer content distribution.

The heterophasic propylene copolymer is preferably produced in a sequential polymerization process, i.e. in a multistage process, known in the art, wherein the (semi)crystalline propylene polymer is produced at least in one slurry reactor, preferably in a slurry reactor and optionally in a subsequent gas phase reactor, and subsequently the elastomer is produced at least in one, i.e. one or two, gas phase reactor(s).

Accordingly it is preferred that the heterophasic propylene copolymer is produced in a sequential polymerization process comprising the steps of (a) polymerizing propylene and optionally at least one ethylene and/or C4 to C8 $\alpha$-olefin in a first reactor obtaining the first polypropylene fraction of the matrix (M), preferably said first polypropylene fraction is a propylene homopolymer, (b) optionally transferring the first polypropylene fraction into a second reactor (R2), (c) optionally polymerizing in the second reactor and in the presence of said first polypropylene fraction propylene and optionally at least one ethylene and/or $C_4$ to $C_8$ $\alpha$-olefin obtaining thereby a second polypropylene fraction, preferably said second polypropylene fraction is a second propylene homopolymer, said first polypropylene fraction and optionally said second polypropylene fraction form the matrix, i.e. the matrix of the heterophasic propylene copolymer, (d) transferring the matrix of step (c) into a third reactor, (e) polymerizing in the third reactor and in the presence of the matrix obtained in step (a) or (c) propylene and ethylene to obtain the elastomer dispersed in the matrix, the matrix and the elastomer form the heterophasic propylene copolymer.

It is preferred that the heterophasic propylene copolymer is prepared in the presence of a Ziegler-Natta catalyst comprising compounds (TC) of a transition metal of Group 4 to 6 of IUPAC, a Group 2 metal compound (MC) and an internal donor (ID); optionally a co-catalyst (Co), and optionally an external donor (ED).

This Ziegler-Natta catalyst can be any stereospecific Ziegler-Natta catalyst for propylene polymerization, which preferably is capable of catalyzing the polymerization and copolymerization of propylene and optional comonomers at a pressure of 500 to 10000 kPa, in particular 2500 to 8000 kPa, and at a temperature of 40 to 110°C, in particular of 60 to 110°C.

Preferably, the Ziegler-Natta catalyst comprises a high-yield Ziegler-Natta type catalyst including an internal donor component, which can be used at high polymerization temperatures of 80°C or more. Such high-yield Ziegler-Natta catalyst can comprise a succinate, a diether, a citraconate, a phthalate etc., or mixtures therefrom as internal donor (ID). Preferably, the internal donor (ID) is free of phthalate compounds.

According to one preferred embodiment of the present invention, the polypropylene polymer a) consists of the heterophasic propylene copolymer as described herein.

As discussed above, in the second aspect of the flame retardant polypropylene composition, the polypropylene polymer a) preferably comprises, or consists of a heterophasic propylene copolymer and/or a polypropylene random copolymer and/or a polypropylene homopolymer.

Preferably, the polypropylene random copolymer is present in an amount of 10.0 to 40.0 wt.%, more preferably 15 to 35 wt.%, more preferably 20 to 30 wt.%, based on the total weight of the flame retardant polypropylene composition.

Preferably, the polypropylene random copolymer has a melt flow rate $MFR_2$ (230°C, 2.16 kg) of from 0.3 to 120 g/10 min, more preferably of from 10 to 90 g/10 min, even more preferably 50 to 80 g/10min, determined according to ISO 1133 and/or a density of from 0.880 to 0.910 g/cm$^3$, more preferably of from 0.890 to 0.910 g/cm$^3$ determined according to ISO 1183.

Preferably, the polypropylene random copolymer is a copolymer of propylene and ethylene and/or a $C_4$ to $C_8$ alpha-olefin, more preferably a copolymer of propylene and ethylene.

Preferably, the polypropylene random copolymer being a copolymer of propylene and ethylene has an ethylene content of from 3.1 to 4.7 wt.%, more preferably 3.3 to 4.5 wt.%, more preferably 3.5 to 4.3 wt.%, even more preferably 3.7 to 4.1 wt.%, based on the total weight of the polypropylene random copolymer.

Preferably, the polypropylene homopolymer has a melt flow rate $MFR_2$ (230°C, 2.16 kg) of from 100 to 600 g/10 min, more preferably 350 to 550 g/10 min, more preferably 400 to 500 g/10 min, more preferably 425 to 475 g/10 min, determined according to ISO 1133 and/or a density of from 0.890 to 0.910 g/cm$^3$ determined according to ISO 1183.

Preferably, the polypropylene polymer a) may further comprise maleic anhydride grafted polypropylene. The maleic anhydride grafted polypropylene is present in an amount of preferably 0.5 to 2.5 wt.%, more preferably 1.0 to 2.0 wt.%, based on the total weight of the flame retardant polypropylene composition

The flame retardant polypropylene composition according to the invention comprises a nitrogen-containing flame retardant b).

Preferably, the nitrogen-containing flame retardant b) is present in an amount of 10.0 to 40.0 wt.%, more preferably 15.0 to 35.0 wt.%, even more preferably 20.0 to 30.0 wt.%, and most preferably 22.0 to 26.0 wt.%, based on the total weight of the flame retardant polypropylene composition.

Preferably, the nitrogen-containing flame retardant b) is free of halogens. In other words, it is preferred that the nitrogen-containing flame retardant does not contain any organic or inorganic compounds containing halogen atoms. As used herein, the term "halogen" refers to the elements of group 17 of the periodic table.

Preferably, the nitrogen-containing flame retardant b) comprises at least one nitrogen-containing phosphate, preferably at least one organic nitrogen-containing phosphate. Preferably, the nitrogen-containing flame retardant or the organic nitrogen-containing phosphate comprises or is a phosphate of heterocyclic $C_3$-$C_6$-, more preferably $C_3$-$C_4$-alkyl or -aryl compounds comprising at least one N-atom.

Preferably, the nitrogen-containing flame retardant comprises a first nitrogen-containing phosphate and a second nitrogen-containing phosphate different from the first nitrogen-containing phosphate.

Preferably, the first nitrogen-containing phosphate and the second nitrogen-containing phosphate are organic nitrogen-containing phosphates. It is especially preferred that the first nitrogen-containing phosphate and the second nitrogen-containing phosphate are phosphates of heterocyclic $C_3$-$C_6$-, more preferably $C_3$-$C_4$-alkyl or -aryl compounds comprising at least one N-atom.

It is preferred that the first nitrogen-containing phosphate is an organic nitrogen-containing polyphosphate. More preferably, the first nitrogen-containing phosphate is a polyphosphate of a heterocyclic $C_3$-$C_6$-, more preferably $C_3$-$C_4$-aryl compound comprising at least one N-atom. It is especially preferred that the first nitrogen-containing phosphate is melamine polyphosphate.

It is preferred that the second nitrogen-containing phosphate is an organic nitrogen-containing diphosphate. More preferably, the second nitrogen-containing phosphate is a diphosphate of a heterocyclic $C_3$-$C_6$-, more preferably $C_3$-$C_4$-alkyl compound comprising at least one N-atom, like two N-atoms. It is especially preferred that the second nitrogen-containing phosphate is piperazine pyrophosphate.

Preferably, the first nitrogen-containing phosphate comprises, or consists of, melamine polyphosphate and/or wherein the second nitrogen-containing phosphate comprises, or consists of, piperazine pyrophosphate.

Preferably, the weight ratio between the first nitrogen-containing phosphate and the second nitrogen-containing phosphate is in the range of 35:75 to 75:35, preferably in the range of 40:60 to 60:40.

The nitrogen-containing flame retardant, in particular those commercially available, may contain further components in minor amounts, like additives, flame retardant synergists and/or carrier medium. Thus it is to be understood that such further components are calculated to the amount of the nitrogen-containing flame retardant.

The flame retardant polypropylene composition according to the invention comprises carbon black c).

Preferably, carbon black c) is present in an amount of 0.2 to 10.0 wt.%, more preferably 0.4 to 5.0 wt.%, and most preferably 0.6 to 1.0 wt.%, based on the total weight of the flame retardant polypropylene composition.

Preferably, carbon black is in the form of a masterbatch. Carbon black and carbon black masterbatches are commercially available, such as the carbon black masterbatch CBMB-LD-09-A02 (40% carbon black in PE).

The flame retardant polypropylene composition according to the second aspect comprises glass fibers d) in an amount of 0.6 to 40.0 wt.% based on the total weight of the flame retardant polypropylene composition.

Preferably, the glass fibers d) are present in an amount of 1.0 to 38.0 wt.%, more preferably 5.0 to 36.0 wt.%, even more preferably 10.0 to 34.0 wt.%, yet more preferably 15.0 to 32.0 wt.%, and most preferably 20.0 to 30.0 wt.%, based on the total weight of the flame retardant polypropylene composition.

Preferably, the glass fibers d) are cut glass fibers, also known as short glass fibers (SGF) or chopped strands, and/or long glass fibers (LGF), preferably long glass fibers (LGF) obtained from glass rovings.

It is particularly preferred that the glass fibers d) are short glass fibers (SGF).

The cut or short glass fibers (SGF) within the flame retardant polypropylene composition preferably have a weight average fiber length determined according to FASEP after injection moulding according to EN ISO 1873-2 of the flame retardant polypropylene composition in the range of 0.2 to 1.2 mm, more preferably in the range of 0.25 to 1.0 mm, still more preferably in the range of 0.3 to 0. 8 mm.

The initial average length of the short glass fibers (SGF) as provided by the supplier, i.e. the average length of the short fibers (SFG) before melt blending with the components of the flame retardant polypropylene composition, differs from the above mentioned weight average fiber length of the short glass fibers (SGF) within the fiber reinforced composition (C).

The cut or short glass fibers (SGF) used in the flame retardant polypropylene composition preferably have an initial average length in the range of from 2.0 to 10.0 mm, more preferably in the range of 2.3 to 9.0 mm, still more preferably in the range of 2.5 to 8.0 mm, like in the range of 3.0 to 7.0 mm.

The cut or short glass fibers (SGF) used in the flame retardant polypropylene composition preferably have an average diameter of from 5 to 20 $\mu$m, more preferably from 6 to 18 $\mu$m, still more preferably 8 to 16 $\mu$m.

Preferably, the short glass fibers (SGF) have an initial aspect ratio of 125 to 650, preferably of 150 to 500, more preferably 200 to 450. The aspect ratio is the relation between average length and average diameter of the fibers.

The initial average length, average diameter and initial average aspect ratio of the short glass fibers (SGF) refer to the values of the raw material as provided by the supplier.

Adding glass fibers improves the mechanical strength of the inventive flame retardant polypropylene compositions.

Preferably, the flame retardant polypropylene composition further comprises

e) an additive.

The additive e) can also be a mixture of two or more additives differing from each other. Typical additives are acid scavengers, antioxidants, colorants, light stabilizers, slip agents, anti-scratch agents, dispersing agents, processing aids, lubricants. Preferably, the additive comprises one or more antioxidant(s). The antioxidant preferably comprises a phosphorous containing antioxidant and and/or a sterically hindered phenol antioxidant. For the sake of clarity only, the carbon black comprised in the flame retardant polypropylene composition according to the invention is not considered as "additive".

Such additives are commercially available and for example described in "Plastic Additives Handbook", 6th edition 2009 of Hans Zweifel (pages 1141 to 1190).

Furthermore, the term "additive" according to the present invention also includes carrier materials, in particular polymeric carrier materials. Any polymer being a carrier material for the additive is not calculated to the amount of the respective additive. The polymeric carrier material of the additive is a carrier polymer to ensure a uniform distribution in the flame retardant polypropylene composition of the invention. The polymeric carrier material is not limited to a particular polymer. The polymeric carrier material may be ethylene homopolymer, ethylene copolymer obtained from ethylene and $\alpha$-olefin comonomer such as $C_3$ to $C_8$ alpha-olefin comonomer, propylene homopolymer and/or propylene copolymer obtained from propylene and $\alpha$-olefin comonomer such as ethylene and/or $C_4$ to $C_8$ alpha-olefin comonomer. It is preferred that the polymeric carrier material does not contain monomeric units derivable from styrene or derivatives thereof.

Preferably, the additive e) is present in an amount of from 0.01 to 5.0 wt.%, more preferably 0.1 to 3.5 wt.%, more preferably 0.2 to 2.0 wt.%, most preferably 0.3 to 1.0 wt.%, based on the total weight of the flame retardant polypropylene composition.

Preferably, the flame retardant polypropylene composition is free of fluoropolymers. In particular, it is preferred that the flame retardant polypropylene composition does not contain fluoropolymers in amounts exceeding 0.5 wt.%, more preferably not exceeding 0.2 wt.%, still more preferably not exceeding 0.01 wt.%, and most preferably not exceeding 0.001 wt.%. It is especially preferred that no fluoropolymers have been used in the production of the flame retardant polypropylene composition.

As used herein, the term "fluoropolymer" refers to a polymeric compound comprising fluorine atoms. Examples for fluoropolymers are poly(tetrafluoro ethylene) (PTFE), tetrafluoroethylene-hexafluoropropylene-copolymer (FEP) and polychlorotrifluoroethylene (PCTFE).

The invention further provides an article comprising, or consisting of, the flame retardant polypropylene composition according to the invention. Preferably, the a article comprises at least 60 wt.%, more preferably at least 80 wt.%, more preferably at least 90 wt.%, more preferably at least 95 wt.% and most preferably at least 99 wt.%, of the flame retardant polypropylene composition according to the invention. In a preferred embodiment the article consists of the flame retardant polypropylene composition according to the invention.

Preferably, the article is an automotive article or a home electric appliance article, such as an electric cable insulation, housings of electric devices, containers and parts of power electronic components of automobile parts and home electric appliance parts.

The invention further provides the use of the flame retardant polypropylene composition according to the invention for laser-marking.

The invention will be further illustrated and described below by means of nonlimiting examples. The attached figures show

Figure 1 data matrix code on a specimen made from inventive example IE1 using laser marking,

Figure 2 data matrix code on a specimen made from inventive example IE2 using laser marking,

Figure 3 data matrix code on a specimen made from inventive example IE3 using laser marking.

**Experimental Part**

**Measurement methods**

Any parameter mentioned above in the detailed description of the invention is measured according to the tests given below.

*a) Melt Flow Rate*

The melt flow rate (MFR) was determined according to ISO 1133 and is indicated in g/10 min. The MFR is an indication of the melt viscosity of the polymer. The MFR is determined at 190°C for PE and 230°C for PP. $MFR_2$ is determined at load of 2.16 kg.

*b) Density*

Density of the polymer was determined according to ISO 1183-1:2004 (method A) on compression molded specimen prepared according to ISO 17855-2 and is given in $kg/m^3$.

*c) Comonomer determination by NMR*

Quantitative nuclear-magnetic resonance (NMR) spectroscopy was used to quantify the comonomer content and comonomer sequence distribution of the polymers.

Quantitative $^{13}C\{^1H\}$ NMR spectra were recorded in the solution-state using a Bruker Avance III 400 NMR spectrometer operating at 400.15 and 100.62 MHz for $^1H$ and $^{13}C$ respectively. All spectra were recorded using a $^{13}C$ optimized 10 mm extended temperature probehead at 125°C using nitrogen gas for all pneumatics. Approximately 200 mg of material was dissolved in 3 ml of 1,2-tetrachloroethane-$d_2$ (TCE-$d_2$) along with chromium-(III)-acetylacetonate (Cr(acac)$_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimized tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra.

Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

For polypropylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).

Specifically the influence of regio defects and comonomer on the quantification of the tacticity distribution was corrected for by subtraction of representative regio defect and comonomer integrals from the specific integral regions of the stereo sequences.

The isotacticity was determined at the pentad level and reported as the percentage of isotactic pentad (mmmm) sequences with respect to all pentad sequences:

$$[mmmm] \% = 100 * ( mmmm / \text{sum of all pentads} )$$

The presence of 2,1 erythro regio defects was indicated by the presence of the two methyl sites at 17.7 and 17.2 ppm and confirmed by other characteristic sites.

Characteristic signals corresponding to other types of regio defects were not observed (Resconi, L., Cavallo, L., Fait, A., Piemontesi, F., Chem. Rev. 2000, 100, 1253).

The amount of 2,1 erythro regio defects was quantified using the average integral of the two characteristic methyl sites at 17.7 and 17.2 ppm:

$$P_{21e} = ( I_{e6} + I_{e8} ) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio defects:

$$P_{total} = P_{12} + P_{21e}$$

The mole percent of 2,1 erythro regio defects was quantified with respect to all propene:

$$[21e] \text{ mol}\% = 100 * ( P_{21e} / P_{total} )$$

For copolymers characteristic signals corresponding to the incorporation of ethylene were observed (Cheng, H. N., Macromolecules 17 (1984), 1950).

With regio defects also observed (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) correction for the influence of such defects on the comonomer content was required.

The comonomer fraction was quantified using the method of Wang et. al. (Wang, W-J., Zhu, S., Macromolecules 33 (2000), 1157) through integration of multiple signals across the whole spectral region in the $^{13}C\{^{1}H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\%] = 100 * fE$$

The weight percent comonomer incorporation was calculated from the mole fraction:

$$E\ [wt.\%] = 100 * (fE * 28.06) / ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

*d) Intrinsic viscosity (IV)*

The intrinsic viscosity of propylene homopolymers and copolymers was measured according to DIN ISO 1628/1, October 1999 (in Decalin at 135 °C).

*e) Xylene cold solubles (XCS, wt.%)*

The content of the xylene cold solubles (XCS) was determined at 25 °C according ISO 16152; first edition; 2005-07-01.

*f) Laser marking*

The quality of laser marking was determined according to ISO 29158. The specimen types used in each case were quadratic injection moulded specimens with dimension 60x60x2 mm$^3$). A FAYb (Fiber) laser technology was used, with working distance 190 mm, marking field 90x90 mm$^2$, and marking time 4.6 s.

**Materials**

The following materials were used for preparing inventive examples (IE) of the flame retardant polypropylene composition.
AO1 is a phosphorous containing antioxidant (CAS-no. 31570-04-4) and commercially available from BASF.
AO2 is a sterically hindered phenol antioxidant (CAS-no. 6683-19-8) and commercially available from BASF.
AO3 is an antioxidant and metal deactivator (CAS-No. 70331-94-1) and is commercially available as Naugard XL-1 of Addivant.
AP is maleic anhydride grafted polypropylene SCONA TPPP 8112 GA (CAS-No. 25722-45-6), commercially available from Scona, having a maleic anhydride content of 1.4 wt.% and an MFR (190 °C, 2.16 kg) above 80 g/10 min.
CB is the commercial carbon black masterbatch CBMB-LD-09-A02 (40 wt.% carbon black in PE), available by Borealis.
FR is a nitrogen-containing flame retardant comprising 60 to 65 wt.% of piperazine pyrophosphate and 35 to 40 wt.% melamine polyphosphate.
GF are chopped glass fibers having a fiber diameter of 13.0 μm (ISO 3344) and a fibre length of 3.0 mm, commercially available from Johns Manville.
PP HECO 1 is a heterophasic polypropylene copolymer having a density of 905 kg/m$^3$ (ISO 1183) and a MFR$_2$ of 20 g/10 min (ISO 1133). The heterophasic polypropylene copolymer was produced using the Borstar® process and using a catalyst being prepared as follows: 3,4 litre of 2-ethylhexanol and 810 mL of propylene glycol butyl monoether (in a molar ratio 4/1) were added to a 20 L reactor. Then 7.8 litre of a 20 % solution in toluene of BEM (butyl ethyl magnesium) provided by Crompton GmbH were slowly added to the well stirred alcohol mixture. During the addition the temperature was kept at 10 °C. After addition the temperature of the reaction mixture was raised to 60 °C and mixing was continued at this temperature for 30 minutes. Finally after cooling to room temperature the obtained Mg-alkoxide was transferred to storage vessel. 21.2 g of Mg alkoxide prepared above was mixed with 4.0 mL bis(2-ethylhexyl) citraconate for 5 min. After mixing the obtained Mg complex was used immediately in the preparation of catalyst component. 19.5 mL titanium tetrachloride was placed in a 300 mL reactor equipped with a mechanical stirrer at 25°C. Mixing speed was adjusted to 170 rpm. 26.0 of Mg-complex prepared above was added within 30 minutes keeping the temperature at 25 °C .3.0 mL of Viscoplex 1-254 and 1.0 mL of a toluene solution with 2 mg Necadd 447 was added. Then 24.0 mL of heptane was added to form an emulsion. Mixing was continued for 30 minutes at 25 °C. Then the reactor temperature was raised to 90°C within 30 minutes. The reaction mixture was stirred for further 30 minutes at 90°C. Afterwards stirring was stopped and the reaction mixture was allowed to settle for 15 minutes at 90°C.

The solid material was washed 5 times: Washings were made at 80 °C under stirring 30 min with 170 rpm. After stirring was stopped the reaction mixture was allowed to settle for 20-30 minutes and followed by siphoning. Wash 1: Washing was made with a mixture of 100 ml of toluene and 1 mL donor. Wash 2: Washing was made with a mixture of 30 ml of $TiCl_4$ and 1 mL of donor. Wash 3: Washing was made with 100 mL toluene. Wash 4: Washing was made with 60 mL of heptane. Wash 5. Washing was made with 60 mL of heptane under 10 minutes stirring.

Afterwards stirring was stopped and the reaction mixture was allowed to settle for 10 minutes decreasing the temperature to 70°C with subsequent siphoning, and followed by $N_2$ sparging for 20 minutes to yield an air sensitive powder.

The VCH modification of this catalyst was as follows: 35 mL of mineral oil (Paraffinum Liquidum PL68) was added to a 125 mL stainless steel reactor followed by 0.82 g of triethyl aluminium (TEAL) and 0.33 g of dicyclopentyl dimethoxy silane (donor D) under inert conditions at room temperature. After 10 minutes 5.0 g of the catalyst prepared in 1a (Ti content 1.4 wt.%) was added and after additionally 20 minutes 5.0 g of vinylcyclohexane (VCH) was added.).The temperature was increased to 60 °C during 30 minutes and was kept there for 20 hours. Finally, the temperature was decreased to 20 °C and the concentration of unreacted VCH in the oil/catalyst mixture was analyzed and was found to be 120 ppm weight.

PP HECO 2 is a heterophasic polypropylene copolymer having a density of 908 kg/m$^3$ (ISO 1183) and a $MFR_2$ of 100 g/10 min (ISO 1133). The heterophasic polypropylene copolymer was produced using the Borstar® process and using the commercial Ziegler-Natta catalyst Avant ZN180M of LyondellBasell with dicyclopentyl dimethoxy silane (donor D) as external donor.

Table A Preparation and properties of PP HECO 1 and PP HECO 2

| | | PP HECO 1 | PP HECO 2 |
|---|---|---|---|
| **Prepolymerization** | | | |
| Co/Donor | mol/mol | 20 | 10 |
| Co/Ti | mol/mol | 250 | 220 |
| Temperature | °C | 21 | 30 |
| Residence time | min | 20 | 5 |
| **Loop (R1)** | | | |
| Temperature | °C | 80 | 75 |
| Split | wt.% | 51 | 52 |
| H2/C3 | mol/kmol | 6.40 | 22.00 |
| MFR2 | g/10min | 42 | 160 |
| **GPR1 (R2)** | | | |
| Temperature | °C | 80 | 80 |
| Split | wt.% | 30 | 34 |
| H2/C3 | mol/kmol | 69.3 | 175.0 |
| MFR2 | g/10min | 42 | 160 |
| XCS | wt.% | 2.0 | 2.0 |
| **GPR2 (R3)** | | | |
| Temperature | °C | 80 | 80 |
| C2/C3 | mol/kmol | 399 | 550 |
| H2/C2 | mol/kmol | 84 | 250 |

(continued)

| GPR2 (R3) | | | |
|---|---|---|---|
| Split | wt.% | 19 | 14 |
| MFR2 | g/10min | 19.0 | 99.0 |
| **Final** | | | |
| XCS | wt.% | 17.5 | 15.0 |
| C2(total) | mol% | 7.5 | 8.0 |
| C2(XCS) | mol% | 43.6 | 39.0 |
| IV(XCS) | dL/g | 2.6 | 2.0 |
| MFR2 | g/10min | 20 | 100 |
| Tm | °C | 166 | 165 |
| Tc | °C | 130 | 121 |
| density | kg/m$^3$ | 905 | 908 |

PP HECO 3 is a random heterophasic polypropylene copolymer having a density of 895 kg/m$^3$ (ISO 1183), and was produced using the Borstar® process and the catalyst was prepared as disclosed for Comparative Example 1 in WO 2016/055361. Polymerization conditions are given in Table B below.

**Table B** Preparation and properties of PP HECO 3

| | | PP HECO 3 |
|---|---|---|
| **Prepoly** | | |
| TEAL/donor D | mol/mol | 10 |
| TEAL/Ti | mol/mol | 220 |
| Temperature | °C | 25 |
| Residence time | min | 15 |
| **Loop** | | |
| Temperature | °C | 75 |
| Pressure | kPa | 5000 |
| Split | wt.% | 35 |
| Feed H2/C3 | mol/kmol | 1.70 |
| Feed C2/C3 | mol/kmol | 4.50 |
| C2 (Loop) | wt.% | 2.50 |
| MFR2 | g/10min | 8.0 |
| **GPR1** | | |
| Temperature | °C | 80 |
| Pressure | kPa | 2800 |
| Split | wt.% | 52 |
| Feed H2/C3 | mol/kmol | 21.5 |
| Feed C2/C3 | mol/kmol | 28.1 |
| MFR2 (GPR1) | g/10min | 8.0 |
| MFR2 in GPR1 | g/10min | 8.0 |
| C2 (GPR1) | wt.% | 4.00 |

(continued)

| GPR1 | | |
| --- | --- | --- |
| C2 in GPR1 | wt.% | 5.10 |
| XCS | wt.% | 7.5 |
| **GPR2** | | |
| Temperature | °C | 75 |
| Pressure | kPa | 2600 |
| Feed C2/C3 | mol/kmol | 490 |
| Feed H2/C2 | mol/kmol | 530 |
| C2 in GPR2 | wt.% | 34.5 |
| Split | wt.% | 13 |
| MFR2 | g/10min | 7.0 |
| **Pellet** | | |
| XCS | wt.% | 20.0 |
| C2(total) | wt.% | 8.0 |
| C2(XCS) | wt.% | 30.0 |
| iV(XCS) | dl/g | 1.6 |
| MFR2 | g/10min | 7.0 |
| Tm | °C | 142 |
| Tc | °C | 112 |

PP 1 is a random propylene copolymer having a density of 905 kg/m$^3$ (ISO 1183) and corresponds to inventive example IE3 of EP 2 527 593 A1.

PTFE is the commercial PTFE DYNEON TF 2025 Z PTFE from company 3M.

## Examples

The flame retardant polypropylene compositions IE1 to IE 3 with or without glass fibers were prepared by melt blending the polypropylene polymer(s) in a corotating twin screw extruder with the nitrogen-containing flame retardant, carbon black and further components as shown in Table 1 below.

**Table 1** Composition of the flame retardant polypropylene composition

| Component, wt.% | IE1 | IE2 | IE3 |
| --- | --- | --- | --- |
| PP HECO 1 | 73.65 | | |
| PP HECO 2 | | 44.35 | |
| PP 1 | | | 24.35 |
| PP HECO 3 | | | 25 |
| FR | 25 | 23 | 23 |
| CB | 0.7 | 0.7 | 0.7 |
| PTFE | 0.2 | | |
| GF | | 30 | 25 |
| AP | | 1.5 | 1.5 |
| AO1 | 0.1 | 0.1 | 0.1 |
| AO2 | 0.1 | 0.1 | 0.1 |

(continued)

| Component, wt.% | IE1 | IE2 | IE3 |
|---|---|---|---|
| AO3 | 0.25 | 0.25 | 0.25 |

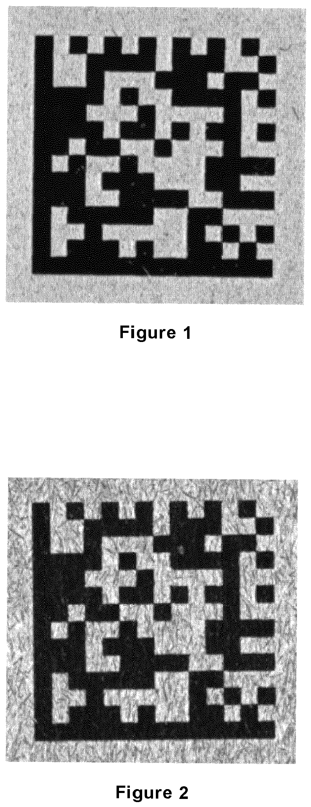

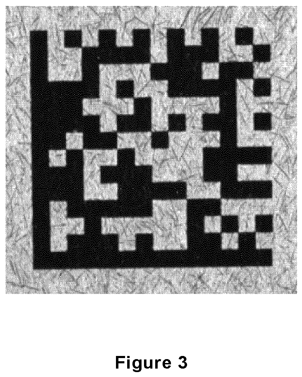

IE1 to IE3 were used for laser marking experiments, the results and conditions are shown in Table 2 as well as in Figures 1 to 3 below.

**Table 2** Laser marking results and conditions

| ISO 29158 | IE1 | IE2 | IE3 |
|---|---|---|---|
| Grade | A (4.0) | A (4.0) | A (4.0) |
| Aperture | 13 | 13 | 13 |
| Wavelength | 660 | 660 | 660 |
| Lightning | 45Q | 45Q | 45Q |

The quality of the Data Matrix Code is A(4) for all examples, see Table 2 above. Thus, all tested flame retardant polypropylene compositions show very good readability at the laser marking test.

## Claims

1. A flame retardant polypropylene composition comprising

   a) a polypropylene polymer in an amount of 23.0 to 80.0 wt.% based on the total weight of the flame retardant polypropylene composition,
   b) a nitrogen-containing flame retardant in an amount of 10.0 to 40.0 wt.% based on the total weight of the flame retardant polypropylene composition,
   c) carbon black in an amount of 0.1 to 15.0 wt.% based on the total weight of the flame retardant polypropylene composition,

   and wherein the flame retardant polypropylene composition does not comprise a high melt strength polypropylene.

2. A flame retardant polypropylene composition comprising

   a) a polypropylene polymer in an amount of 23.0 to 80.0 wt.% based on the total weight of the flame retardant polypropylene composition,
   b) a nitrogen-containing flame retardant in an amount of 10.0 to 40.0 wt.% based on the total weight of the flame retardant polypropylene composition,
   c) carbon black in an amount of 0.1 to 15.0 wt.% based on the total weight of the weight of the flame retardant polypropylene composition,
   d) glass fibers in an amount of 0.6 to 40.0 wt.% based on the total weight of the flame retardant polypropylene composition.

3. The flame retardant polypropylene composition according to claim 1, wherein the polypropylene polymer comprises a heterophasic propylene copolymer.

4. The flame retardant polypropylene composition according to claim 2, wherein the polypropylene polymer comprises a heterophasic propylene copolymer and/or a polypropylene random copolymer and/or a polypropylene homopolymer.

5. The flame retardant polypropylene composition according to any one of claims 3 or 4, wherein the heterophasic propylene copolymer has a melt flow rate $MFR_2$ (230°C, 2.16 kg) of from 0.5 to 120 g/10 min determined according to ISO 1133 and/or a density of from 0.880 to 0.910 g/cm$^3$ determined according to ISO 1183.

6. The flame retardant polypropylene composition according to claim 4, wherein the polypropylene random copolymer has a melt flow rate MFR2 (230 °C, 2.16 kg) of from 0.3 to 120 g/10 min determined according to ISO 1133 and/or a density of from 0.880 to 0.910 g/cm$^3$ determined according to ISO 1183.

7. The flame retardant polypropylene composition according to any one of claims 4 to 5, wherein the polypropylene homopolymer has a melt flow rate MFR$_2$ (230°C, 2.16 kg) of from 100 to 600 g/10 min determined according to ISO 1133 and/or a density of from 0.890 to 0.910 g/cm$^3$ determined according to ISO 1183.

8. The flame retardant polypropylene composition according to any one of the preceding claims, wherein the nitrogen-containing flame retardant comprises at least one nitrogen-containing phosphate.

9. The flame retardant polypropylene composition according to any one of the preceding claims, wherein the nitrogen-containing flame retardant comprises a phosphate of heterocyclic C$_3$-C$_6$ alkyl or -aryl compounds comprising at least one N-atom.

10. The flame retardant polypropylene composition according to any one of the preceding claims, wherein the nitrogen-containing flame retardant comprises a first nitrogen-containing phosphate and a second nitrogen-containing phosphate different from the first nitrogen-containing phosphate.

11. The flame retardant polypropylene composition according to claim 10, wherein the first nitrogen-containing phosphate comprises, or consists of, melamine polyphosphate and/or wherein the second nitrogen-containing phosphate comprises, or consists of, piperazine pyrophosphate.

12. The flame retardant polypropylene composition according to any one of the preceding claims, wherein the nitrogen-containing flame retardant is free of halogens.

13. The flame retardant polypropylene composition according to any one of the preceding claims, further comprising e) an additive, the additive preferably comprising one or more antioxidant(s).

14. Article comprising, or consisting of, the flame retardant polypropylene composition according to any one of claims 1 to 13.

15. Use of the flame retardant polypropylene composition according to any one of claims 1 to 13 for laser-marking.

Figure 1

Figure 2

Figure 3

Europäisches Patentamt

European Patent Office

Office européen des brevets

# EUROPEAN SEARCH REPORT

**Application Number**

EP 23 18 4500

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 4 124 636 A1 (BOREALIS AG [AT]) 1 February 2023 (2023-02-01) | 1,3-14 | INV. C08K3/04 |
| Y | * example CE1; table 2 * <br> * claims 1,2,7-10,13-15 * <br> ----- | 15 | C08K5/52 <br> C08K7/14 <br> C08L23/14 |
| X | WO 2022/189647 A1 (BOREALIS AG [AT]) 15 September 2022 (2022-09-15) | 1-14 | B41M5/26 |
| Y | * examples IE1, IE2; tables 1,2 * <br> * claims * <br> ----- | 15 | |
| Y | EP 0 924 095 A1 (JAPAN POLYCHEM CORP [JP]; RHOMBIC CORP [JP]) 23 June 1999 (1999-06-23) * table 1 * * claims 1-3 * <br> ----- | 15 | |

**TECHNICAL FIELDS SEARCHED (IPC)**

C08K
B41M

The present search report has been drawn up for all claims

| Place of search | Date of completion of the search | Examiner |
|---|---|---|
| Munich | 12 December 2023 | Russell, Graham |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 18 4500**

This annex lists the patent family members relating to the patent documents cited in  the above-mentioned European search report.
The members are as contained in the European Patent Office EDP file on
The European Patent Office is in no way liable for these particulars which are merely given for the purpose of information.

**12‑12‑2023**

| Patent document cited in search report | | Publication date | Patent family member(s) | | Publication date |
|---|---|---|---|---|---|
| EP 4124636 | A1 | 01‑02‑2023 | EP | 4124636 A1 | 01‑02‑2023 |
|  |  |  | WO | 2023006797 A1 | 02‑02‑2023 |
| WO 2022189647 | A1 | 15‑09‑2022 | BR | 112023018113 A2 | 31‑10‑2023 |
|  |  |  | CN | 116940629 A | 24‑10‑2023 |
|  |  |  | KR | 20230154266 A | 07‑11‑2023 |
|  |  |  | WO | 2022189647 A1 | 15‑09‑2022 |
| EP 0924095 | A1 | 23‑06‑1999 | EP | 0924095 A1 | 23‑06‑1999 |
|  |  |  | JP | H11181104 A | 06‑07‑1999 |

EPO FORM P0459

For more details about this annex : see Official Journal of the European Patent Office, No. 12/82

## EP 4 491 663 A1

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1288262 A
- EP 796743 A
- EP 4124636 A
- WO 2016055361 A
- EP 2527593 A1

**Non-patent literature cited in the description**

- **HANS ZWEIFEL**. Plastic Additives Handbook. 2009, 1141-1190
- **SINGH, G.** ; **KOTHARI, A.** ; **GUPTA, V.** *Polymer Testing*, 2009, vol. 28 (5), 475
- **ZHOU, Z.** ; **KUEMMERLE, R.** ; **QIU, X.** ; **REDWINE, D.** ; **CONG, R.** ; **TAHA, A.** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 1128
- **CHENG, H. N.** *Macromolecules*, 1984, vol. 17, 1950
- **RESCONI, L.** ; **CAVALLO, L.** ; **FAIT, A.** ; **PIEMONTESI, F.** *Chem. Rev.*, 2000, vol. 100, 1253
- **WANG, W-J.** ; **ZHU, S.** *Macromolecules*, 2000, vol. 33, 1157
- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M.** ; **SEGRE, A.L.** *Macromoleucles*, 1997, vol. 30, 6251
- **KAKUGO, M.** ; **NAITO, Y.** ; **MIZUNUMA, K.** ; **MIYATAKE, T.** *Macromolecules*, 1982, vol. 15, 1150
- *CHEMICAL ABSTRACTS*, 31570-04-4
- *CHEMICAL ABSTRACTS*, 6683-19-8
- *CHEMICAL ABSTRACTS*, 70331-94-1
- *CHEMICAL ABSTRACTS*, 25722-45-6